# EUROPÄISCHE PATENTANMELDUNG

(11) **EP 0 657 758 A1**
(43) Veröffentlichungstag der Anmeldung: **14.06.1995**
(21) Anmeldenummer: 94116678.7
(22) Anmeldetag: 22.10.1994
(51) Int. Cl.: G02B 21/08

(54) **Kondensor und damit ausgerüstetes Mikroskop**

(30) Priorität: 11.12.1993 DE 9319021 U
(71) Anmelder: ESCHENBACH OPTIK GmbH + Co., D-90409 Nürnberg (DE)
(72) Erfinder: Matzdorf, Manfred, D-91475 Lonnerstadt (DE); Henkelmann, Klaus, D-90552 Röthenbach (DE)
(74) Vertreter: Tergau, Enno, Dipl.-Ing.

(57) **Zusammenfassung**

Bei einem Kondensor, welcher in einer Verstelleinrichtung für eine Verschiebung in einer zu einer optischen Achse (2) normalen Ebene gelagert ist und in Richtung der optischen Achse (2) verstellbar ist, ist der Kondensor in einem Kondensorkörper (1) aufgenommen, welcher in Richtung der optischen Achse (2) und in der zur optischen Achse (2) normalen Ebene in der Verstelleinrichtung verschieblich geführt gelagert ist, wodurch sich eine Verstellung des Kondensors in Richtung der optischen Achse (2) ohne Vorsehen eines zusätzlichen Antriebes bewerkstelligen läßt.

## Beschreibung

Die vorliegende Erfindung bezieht sich auf einen Kondensor, welcher in einer Verstelleinrichtung für eine Verschiebung in einer auf eine optische Achse normalen Ebene gelagert ist und in Richtung der optischen Achse verstellbar ist.

Der Kondensor eines Mikroskops liegt im Bereich der optischen Achse desselben üblicherweise unterhalb des Objekttisches und dient im wesentlichen dazu, die Beleuchtungsverhältnisse am zu betrachtenden Objekt zu konditionieren. Die Aufgabe des Kondensors ist allgemein die Anpassung der Beleuchtungsapertur an die Objektivapertur. Ein derartiger Kondensor enthält in der Regel eine Irisblende, deren Durchtrittsöffnung über eine über die Kondensorfassung hinausstehende Betätigungseinrichtung veränderbar ist.

Ein leistungsfähiger Kondensor gewährleistet die folgenden Beleuchtungsvarianten:
a) Hellfeldbeleuchtung
b) Dunkelfeldbeleuchtung
c) Phasenkontrastbeleuchtung.

Die Beleuchtungsvarianten b) und insbesondere c) dienen dazu, die Ojektbetrachtung ohne Hinzufügung eines Färbemittels zu ermöglichen. Sie erfordern eine beliebig, mögliche Horizontalverschiebbarkeit des Kondensors. Unter "horizontal" soll hierbei die zur optischen Achse normale Richtung verstanden werden, wobei die optische Achse bei Mikroskopen in der Regel vertikal verläuft. Man spricht bei dieser in jeder Richtung möglichen Horziontalverschiebung des Kondensors gegenüber dem Objekttisch auch von der x-y-Verschiebung, wobei x und y zwei Koordinaten bzw. Richtungen in der Horizontalebene bzw. in der Ebene des Objekttisches kennzeichnen.

Für einen Kondensor ist es beispielsweise durch ein Mikroskop der Firma Will in Wetzlar bekannt, diese x-y-Verschiebbarkeit in einer fein einstellbaren Weise durch zwei horizontal in einem Winkel von etwa 120° um die optische Achse versetzt wirksame Verstellschrauben vorzunehmen, die auf den Umfang der Kondensorfassung in radialer Richtung nach innen einwirken. Die beiden mit ihren Achsen horizontal ausgerichteten Verstellschrauben sind in einen die im wesentlichen zylindrische Kondensorfassung mit einem Ringspalt umgebenden Ring geschraubt. Die Kondensorfassung liegt an ihrer dem Einwirkungsbereich der beiden Verstellschrauben gegenüberliegenden Umfangsbereich an einer Druckfeder an, die dort den Ringspalt zwischen der Kondensorfassung und dem Tragring überbrückt und zwischen Tragring und Kondensorfassung verspreizt ist. In Umfangsrichtung des Tragrings hält diese Spreizfeder auch einen Abstand von jeweils ca. 120° zu den beiden Verstellschrauben. Durch Betätigung der Verstellschrauben gegen den Reaktionsdruck der Spreizfeder kann die Kondensorfassung innerhalb des Tragringes in dem gewünschten Bereich verschoben werden, wobei der horizontale Verschiebebereich etwa der Spaltbreite des Ringspaltes entspricht.

Aus der DE-A-32 25 479 ist eine andere Ausführungsform einer Durchlichtbeleuchtungseinrichtung für ein Mikroskop bestehend aus einem Kondensor, einer Aperturirisblende und einem Revolver bekannt geworden, wobei für eine Vergrößerung der Anzahl von nutzbaren Schaltstellungen von Blenden und einer Vereinfachung der Betätigung der einzelnen Bestandteile der Durchlichtbeleuchtungseinrichtung der Revolver mindestens drei Aufnahmeöffnungen zur fallweisen Bestückung mit Ringblenden bzw. Hilfslinsen tragenden Einsätzen besitzt und frei durchschaltbar ist, so daß jeweils die Aperturirisblende nach jedem Umschaltvorgang des Revolvers stets voll geöffnet ist. Eine derartige bekannte Einrichtung bringt eine gewisse Vereinfachung bei der Betätigung und beim Einsatz von unterschiedlichen Blenden bzw. Hilfsblenden mit sich, wodurch die Einsatzmöglichkeiten eines mit einer derartigen Durchlichtbeleuchtungseinrichtung ausgestatteten Mikroskops verbessert werden.

Ein leistungsfähiger Kondensor muß aber auch in Richtung der optischen Achse verschiebbar sein, um die notwendige Variierbarkeit der Beleuchtungsverhältnisse am Betrachtungsobjekt zu gewährleisten. Bei dem oben genannten Mikroskop der Firma Will, Wetzlar, ist daher der Tragring des Kondensors mittels eines vertikalen Höhenverstellantriebes verschiebbar an der Mikroskopsäule geführt. Es ist dies ein herkömmlicher Zahnstangentrieb, wie er dem Zahnstangentrieb zur Höhenverstellung des Objekttisches entspricht.

Dieses bekannte Mikroskop weist daher zwei vertikale, jeweils als Zahnstangentrieb ausgebildete Verschiebeantriebe auf, einmal den herkömmlichen Höhenverstellantrieb zwischen Objekttisch und Ständersäule und einmal den Höhenverstellantrieb zwischen Tragring des Kondensors und Ständersäule des Mikroskops.

Die vorliegende Erfindung zielt nun darauf ab, die Höhenverstellbarkeit bzw. Verstellbarkeit in Richtung der optischen Achse eines Kondensors ausgehend von einem Kondensor der eingangs genannten Art zu vereinfachen, so daß insbesondere auf die Ausbildung eines zusätzlichen, vertikalen Antriebes, wie er beispielsweise für den Objekttisch vorgesehen ist, verzichtet werden kann. Zur Lösung dieser Aufgabe ist der erfindungsgemäße Kondensor im wesentlichen dadurch gekennzeichnet, daß der Kondensor in einem Kondensorkörper aufgenommen ist, welcher in Richtung der optischen Achse und in der zur optischen Achse normalen Ebene in der Verstelleinrichtung verschieblich geführt gelagert ist. Dadurch, daß der Kondensorkörper erfindungsgemäß nunmehr in der Verstelleinrichtung für die Verschiebung in horizontaler Richtung sowohl in der zur optischen Achse normalen Ebene, d.h. im wesentlichen in horizontaler Richtung, verstellbar ist als auch in vertikaler Richtung, d.h. in Richtung der optischen Achse bzw. in z-Richtung verstellbar geführt ist, ergibt sich eine wesentliche Vereinfachung der Konstruktion, bei welcher das Vorsehen eines zusätzlichen Antriebes in vertikaler Richtung, wie er beispielsweise bereits für den Objekttisch vorgesehen sein kann, vollständig entfallen kann. Es entfallen somit umständliche Adaptierungsarbeiten bzw. Zusatzgeräte an Mikroskopen und es kann ein Kondensor, welcher mit einer an sich bekannten Verstelleinrichtung für die horziontale Verschiebung ausgerüstet ist, unmittelbar in jedem auf diese Verstelleinrichtung angepaßten Mikroskop verwendet werden, da der zusätzliche Bewegungsgrad in Richtung der optischen Achse, d.h. in vertikaler Richtung, vollständig in die Verstelleinrichtung für die Verstellbarkeit in horizontaler Richtung integriert ist.

Gemäß einer besonders bevorzugten und einfachen Ausführungsform ist die Ausbildung hierbei erfindungsgemäß so getroffen, daß die Verstelleinrichtung für die Verschiebung in der zur optischen Achse normalen Ebene von einem in einem Kondensorhalter verschieblich gelagerten und feststellbaren Ring gebildet ist und daß der im wesentlichen zylindrische Kondensorkörper über eine Kulissenführung in dem Ring relativ zu diesem verlagerbar geführt ist. Über eine derartige Kulissenführung läßt sich auf kleinstem Raum und in einfacher Weise eine genau definierte und präzise Verstellung des Kondensorkörpers erzielen. Gemäß einer besonders einfachen Ausführungsform ist erfindungsgemäß die Ausbildung dabei so getroffen, daß die Verstelleinrichtung an ihrer zum Kondensorkörper gewandten Innenfläche wenigstens zwei nach innen ragende Vorsprünge bzw. Ausnehmungen aufweist, welche mit entsprechenden komplementär ausgebildeten Ausnehmungen oder Vorsprüngen an der äußeren Umfangsfläche des Kondensorkörpers zusammenwirken, wobei die Ausnehmungen über wenigstens einen Teil ihrer Erstreckung geneigt relativ zur gegenüber der optischen Achse normalen Ebene verlaufen, wobei besonders bevorzugt die Ausnehmungen in Form einer Gewindesteigung ausgebildet sind. Eine derartige Führung zwischen komplementär ausgebildeten Vorsprüngen bzw. Ausnehmungen an zueinander benachbarten Umfangsflächen des Kondensorkörpers sowie der Innenfläche der Verstelleinrichtung läßt sich besonders genau und präzise herstellen, wobei nur eine sehr geringe Anzahl von beweglichen Teilen erforderlich ist.

Darüberhinaus ist im allgemeinen eine Verstellung in Richtung der vertikalen, optischen Achse nur über ein begrenztes Ausmaß erforderlich. Zu diesem Zweck ist erfindungsgemäß vorgesehen, daß sich der geneigte Bereich der Ausnehmungen über einen Winkel von weniger als 90°, insbesondere etwa 70° des Umfanges des Kondensorkörpers erstreckt, so daß für eine ordnungsgemäße und präzise Führung die Ausbildung einer Mehrzahl von geneigten Ausnehmungen in Form einer Gewindesteigung über den Umfang des Kondensorkörpers bzw. die Innenfläche des diesen Kondensorkörper umgebenden Verstellringes möglich ist. Allgemein erfolgt die Bewegung des Kondensorkörpers in Richtung der optischen Achse, d.h. in z-Richtung bzw. in vertikaler Richtung, somit beispielsweise nach Art einer Drehfokussierung eines Zoomobjektives einer Kamera.

Die insbesondere gewindeartige Führung zwischen dem Außenumfang des Kondensorkörpers und dem Innenumfang des Ringes der Verstelleinrichtung für die Verschiebung in der zur optischen Achse normalen Richtung ermöglicht somit eine einfache Bewegbarkeit des Kondensors in Richtung der optischen Achse durch entsprechendes Verdrehen des Kondensorkörpers relativ zum Ring der Verstelleinrichtung. Die Passung entspricht einer Bewegungspassung, die eine Drehbarkeit des Kondensors bzw. des Kondensorkörpers innerhalb des Ringes der Verstelleinrichtung ermöglicht, wobei jedoch bei Erreichen der gewünschten Soll-Drehstellung deren Beibehaltung sichergestellt werden muß.

Zu diesem Zweck ist erfindungsgemäß vorgesehen, daß zwischen dem Innenumfang der Verstelleinrichtung und dem zugewandten Außenumfang des Kondensorkörpers biegsame bzw. elastische Elemente eingeschaltet sind. Derartige biegsame bzw. elastische Elemente zwischen der den Kondensorkörper wenigstens teilweise umgebenden Verstelleinrichtung und dem zugewandten Außenumfang des Kondensorkörpers bewirken eine Spreizwirkung zwischen dem Kondensorkörper und der Verstelleinrichtung bzw. dem Ring derselben, so daß eine gewünschte Drehlage sicher aufrecht erhalten werden kann. Gemäß einer besonders einfachen Ausführungsform ist die Ausbildung so getroffen, daß die biegsamen bzw. elastischen Elemente von Federn gebildet sind, welche am Umfang des Kondensorkörpers gleichmäßig verteilt in entsprechenden Aufnahmeöffnungen gesichert festgelegt sind und radial über den Außenumfang des Kondensorkörpers vorstehen. In besonders platzsparender Weise sind dabei die Federn im wesentlichen in Richtung der z-Achse bzw. der optischen Achse orientiert.

Neben der erfindungsgemäß vorgeschlagenen, einfachen Möglichkeit einer Verstellung entlang der optischen Achse des Kondensors innerhalb der Verstelleinrichtung für die Verschiebung des Kondensors in horizontaler Richtung muß auch für eine ausreichende Fixierung des Kondensorkörpers gegenüber dem Ring der Verstelleinrichtung bzw. der Verstelleinrichtung nach Aufnahme in diesem selbst gesorgt werden. Eine besonders einfache Form einer derartigen gesicherten Festlegung des Kondensorkörpers in der Verstelleinrichtung läßt sich dadurch erzielen, daß der Kondensorkörper über einen Verschluß nach Art eines Bajonettverschlusses in der Verstelleinrichtung gesichert gehalten ist, wie dies einer weiteren bevorzugten Ausführungsform der Erfindung entspricht. Für eine besonders einfache Montage und Demontage ist die Ausbildung bevorzugt so getroffen, daß der bajonettartige Verschluß von wenigstens einem vom Ring der Verstelleinrichtung radial nach innen ragenden Vorsprung gebildet ist, welcher mit einer Kulisse am Außenumfang des Kondensorkörpers zusammenwirkt, wobei die Kulisse als sich in Richtung der optischen Achse erstreckende Längsnut mit daran anschließender, am Umfang des Kondensorkörpers verlaufender, abgestufter Quernut ausgebildet ist. Dadurch ist nach einem einfachen Einführen bzw. Einpassen des Kondensorkörpers in die Verstelleinrichtung dieser sicher in dem Ring der Verstelleinrichtung gehalten und es wird ein irrtümliches Lösen des Kondensorkörpers aus der Verstelleinrichtung sicher verhindert. Der Kondensorkörper wird somit von unten, also an der Ständerfußseite des Mikroskops, in Richtung der z-Achse bzw. der optischen Achse eingeschoben, wobei der vom Ring der Verstelleinrichtung vorragende Vorsprung bzw. Führungsbolzen in die Längsnut auf dem Außenumfang des Kondensorkörpers eintritt und in dieser nach Art einer Nut-Feder-Verbindung geführt ist. Nach Erreichen der Quernut soll eine entsprechende Verdrehung des Kondensorkörpers nach Art eines Bajonettverschlusses erfolgen, wobei nach Passieren des abgestuften Bereiches der Quernut diese Abstufung einen Anschlag bildet, welcher ein irrtümliches Austreten bzw. Entfernen des Kondensorkörpers aus der Verstelleinrichtung wirksam verhindert. Die abgestufte Quernut ist erfindungsgemäß dabei so ausgestaltet, daß ein Zurückdrehen des Kondensorkörpers in eine Lage, in welcher der Führungsbolzen der Verstelleinrichtung unmittelbar in die Längsnut im Außenumfang des Kondensorkörpers eintritt, nicht möglich ist, ohne den Kondensorkörper entsprechend anzuheben.

Wie oben bereits erläutert, ergibt sich eine besonders einfache Möglichkeit einer Führung des Kondensorkörpers in der Verstelleinrichtung für die Verschiebung in der zur optischen Achse normalen Ebene durch Ausbildung von zueinander komplementären Vorsprüngen und Ausnehmungen am Außenumfang des Kondensorkörpers sowie an einer Innenfläche des den Kondensorkörper umgebenden Ringes der Verstelleinrichtung. Gemäß einer besonders bevorzugten Ausführungsform der vorliegenden Erfindung ist die Ausbildung so getroffen, daß die Kulissen des Bajonettverschlusses an die Ausnehmungen für die Verstellung des Kondensorkörpers in Richtung der optischen Achse über die abgestufte Quernut anschließen bzw. mit diesen kombiniert sind, so daß sich insgesamt eine Kombination der Einschub- und Entnahmeführung in Form des Bajonettverschlußes mit der im wesentlichen gewindeartigen Führung zur Verstellung des Kondensors in z-Richtung bzw. Richtung der optischen Achse bewerkstelligen läßt.

Für eine besonders gute Führung und einen stabilen Verschluß könnnen die Kulisse des Bajonettverschlusses sowie die Ausnehmung für die Verstellung in z-Richtung von zwei einander diametral gegenüberliegenden, korrespondierend ausgestalteten Nuten und entsprechenden Innenvorsprüngen bzw. Führungsbolzen der Verstelleinrichtung bzw. des Ringes derselben gebildet sein. Für eine entsprechend leichte Verdrehmöglichkeit ohne unerwünscht großes Spiel dienen wiederum die bereits oben angeführten Federn bzw. biegsamen oder elastischen Elemente, welche zwischen der den Kondensorkörper teilweise umgebenden Stirnfläche der Verstelleinrichtung und der zugewandten Endfläche des Kondensorkörpers angeordnet sind. Für eine gleichmäßige Verteilung der Beanspruchungen können beispielsweise drei Rohrfedern am Umfang des Kondensorkörpers positioniert werden, welche jeweils um 120° zueinander versetzt angeordnet sind. Durch die Kombination der Führung des Kondensorkörpers mit der Verstelleinrichtung bzw. z-Richtung in Form einer gewindeähnlichen Steigung ist es somit möglich, den Kondensor ohne die Zuhilfenahme eines Werkzeuges aus seiner Fassung zu lösen, wenn der Anschlag des Bajonettverschlusses durch entsprechendes Anheben des Kondensorkörpers relativ zur Verstelleinrichtung überwunden wird.

Ein weiteres wichtiges Erfindungsmerkmal besteht in der Ausgestaltung der radial in den Kondensor einschiebbaren Zonenblende oder Filterhalter beispielsweise in allgemeiner Form von Schiebern. Diese Schieber sind im wesentlichen horizontale Platten mit einer Einlegeöffnung für Farb- oder Polarisationsfilter in Form von kreisförmigen Scheiben, deren Durchmesser genormt ist. Bei Ausbildung des Schiebers als Zonenblende ist die bekannte Ringöffnung durch eine das Ringzentrum abdeckende Deckscheibe ausgefüllt. Dadurch kann der Beleuchtungsstrahl nur in Form eines Ringes durch die Schieberöffnung hindurchtreten. Je nach dem angestrebten Effekt wird dadurch ein ringförmiger Lichtdurchtritt unterschiedlichen Durchmessers und unterschiedlicher Ringstärke erzeugt. Entsprechend der Anzahl von gewünschten Varianten ist eine Anzahl von solchen radial in die Kondensorfassung einschiebbaren Schiebern vorhanden. Für diese Schieber enthält die Kondensorfassung bzw. der Kondensorkörper eine geeignete Radialführung. Das Griffende des Schiebers steht radial über den Umfang der Kondensorfassung hinaus, um eine einfache Austauschbarkeit bzw. Einschiebbarkeit des Schiebers zu ermöglichen.

Zur Aufnahme derartiger Schieber für unterschiedliche Blenden oder Filter und für eine einfache Handhabung des Kondensors ist erfindungsgemäß die Ausbildung bevorzugt so getroffen, daß am Kondensorkörper wenigstens ein Blendengehäuse und/oder ein Filterhalter festgelegt sind, in welche in Schiebern gelagerte Blenden und/oder Filter einlegbar bzw. einschiebbar sind, und daß Betätigungsgriffe für die Handhabung der Schieber gleichzeitig als Betätigungsgriffe für die Verstellung des Kondensorkörpers in Richtung der optischen Achse in der diesen umgebenden Verstelleinrichtung dienen. Es ergibt sich somit durch Verwendung der Betätigungsgriffe für die Handhabung der Schieber als Betätigungsgriffe für die Verstellung des Kondensorkörpers und somit des Kondensors in Richtung der z-Achse eine besonders vereinfachte Ausführungsform, welche mit einem Betätigungsgriff die Durchführung mehrerer Handhabungsschritte ermöglicht. Die Bedienungsperson braucht somit nach Einschieben der Zonenblende oder des Filters für eine Verstellung des Kondensors in Richtung der optischen Achse den Kondensor nicht zu umgreifen oder andere Betätigungshebel mit der anderen Hand zu betätigen. In derselben Griffstellung, welche zum Einschieben des Schiebers dient, kann somit auch die Verstellung des Kondensors in z-Richtung vorgenommen werden.

Wie oben bereits angeführt, enthält der Kondensor in der Regel eine Irisblende, deren Durchtrittsöffnung durch einen beispielsweise radial über den Kondensorkörper hinausstehenden Schwenkhebel veränderbar ist, wobei dieser Schwenkhebel um die optische Achse verschwenkbar ist. Für eine Betätigung der Irisblende beträgt der Schwenkwinkel etwa 90°. Für eine weitere Vereinfachung bei der Handhabung des erfindungsgemäßen Kondensors ist nunmehr vorgesehen, daß der Schieber als Blendenhalter ausgebildet ist, welcher an seinem Umfang mit Vorrichtungen versehen ist, die beim Einschieben in das Blendengehäuse automatisch eine vollständige Blendenöffnung der in dem Kondensor enthaltenen Irisblende bewirken, wobei dies nur bei der Ausgestaltung des Schiebers als Zonenblende bzw. Zonenschieber günstig erscheint. Falls der Schieber als Filterhalter ausgestaltet ist, erweist sich eine derartige Kopplung für die Verstellung der Irisblende nicht als notwendig bzw. wünschenswert, da bei Verwendung von Filtern üblicherweise die Öffnung der Irisblende zusätzlich verstellbar bleiben soll.

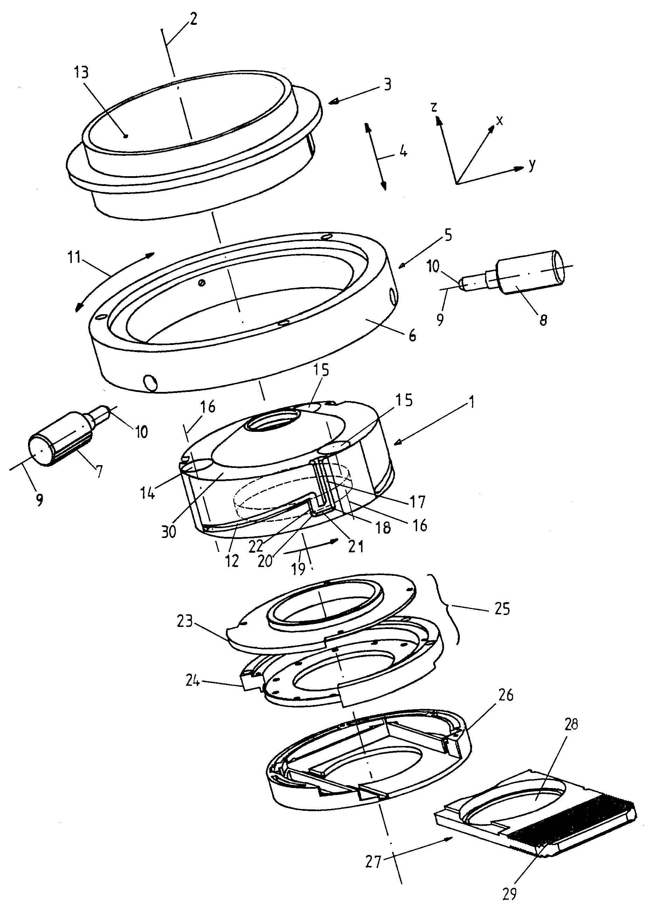

Die Erfindung wird nachfolgend anhand eines in der Zeichnung dargestellten Ausführungsbeispieles erläutert, welches in Explosionsdarstellung den erfindungsgemäßen Kondensor mit einer in ihn integrierten Blende und einem Filterhalter bzw. Schieber zeigt.

Der den Kondensor enthaltende Kondensorkörper 1 weist eine im wesentlichen zylindrische Umfangsform mit der optischen Achse 2 als Zylinderachse auf. Der Kondensorkörper 1 ist innerhalb eines Innenringes 3 einer Verstelleinrichtung für eine Verschiebung des Kondensors in einer zur optischen Achse nomalen, im wesentlichen horizontalen Ebene (x-y-Ebene) in Richtung des Doppelpfeiles 4 höhenverstellbar angeordnet.

Die Höhenverstellbarkeit bzw. Verstellbarkeit des Kondensors in Richtung der optischen Achse 2 ist nachstehend im einzelnen beschrieben. Der Innenring 3 der Verstelleinrichtung für die Verschiebung des Kondensors 1 in der auf die optische Achse normalen, im wesentlichen horizontalen Ebene ist innerhalb des eigentlichen, ortsfest unterhalb des Objekttisches des Mikrospkops fixierten Kondensorhalters 5 gehalten. Der Kondensorhalter 5 weist die Form eines zur optischen Achse 2 koaxialen Außenringes 6 auf, der den Innenring 3 mit umfänglichem Radialabstand umgibt. Der Innenring 3 ist innerhalb der Ringebene des Außenringes 6, nämlich in der sogenannten x-y-Ebene, einstellbar gelagert, wobei die x- und die y-Richtung senkrecht zur in Richtung der optischen Achse 2 verlaufenden z-Richtung ausgerichtet sind. Zur x-y-Verstellung des Innenringes 3 dienen die beiden Stellschrauben 7, 8, deren Schraubachsen 9 radial zur optischen Achse 2 ausgerichtet sind und die mit ihren radial angeordneten, nach innen weisenden Druckenden 10 den Umfang des Innenringes 3 beaufschlagen. Die beiden Stellschrauben 7, 8 sind in Umfangsrichtung 11 des Außenringes 6 um 120° gegeneinander versetzt angeordnet. Ihre Druckenden 10 arbeiten gegen eine nicht dargestellte Druckfeder, die sich im Ringspalt zwischen dem Innenring 3 und dem Außenring 6 befindet und in Umfangsrichtung 11 einen Abstand von jeweils ca. 120° gegenüber den Stellschrauben 7, 8 einhält. Die x-y-Verstellung des Innenringes 3 mit dem Kondensorkörper 1 erfolgt gegen den radial nach innen wirkenden Federdruck dieser Druckfeder.

Der Kondensorkörper 1 ist neben der Verstellung in der horizontalen x-y-Ebene auch in Richtung der optischen Achse 2, also in z-Richtung nach Art eines Zoom-Objektives durch Relativdrehung innerhalb des Innenringes 3 nach Art der Drehfokussierung eines Zoom-Objektives einer Kamera verstellbar. Die relative Drehbarkeit des Kondensorkörpers 1 innerhalb des Innenringes 3 beträgt etwa 70°, da bei einer entsprechenden Neigung des Bewegungsgewindes mit einer derart beschränkten Verdrehbarkeit eine ausreichende Höhenverstellbarkeit in Richtung der optischen Achse 2 des Kondensorkörpers 1 erzielbar ist.

Auf dem Innenumfang des Innenringes 3 stehen radial nach innen (nicht dargestellt) an zwei einander diametral gegenüberliegenden Bereichen der Innenoberfläche 13 nach Art von Nutsteinen wirksame Vorsprünge vor, die in auf dem Umfang des Kondensorkörpers 1 angeordnete Bewegungsnuten bzw. -ausnehmungen 12 eingreifen. Die Bewegungsnuten 12 sind dabei mit der Kulisse eines Bajonettverschlusses zur Halterung des Kondensorköpers 1 innerhalb des Innenringes 3 kombiniert, wie dies weiter unten noch näher erläutert wird.

Die Passung zwischen dem Außenumfang des Kondensorkörpers 1 und dem Innenring 3 entspricht der einer Bewegungspassung. Zur Selbsthemmung dieser Passung, nämlich zur Beibehaltung einer gewünschten Drehstellung und somit Verstellposition in z-Richtung sind im Umfangsbereich des Kondensorköpers 1 radial nach außen auf den Innenumfang 13 des Innenringes 3, welcher die Stirnfläche des Kondensokörpers teilweise übergreift, wirksame Federelemente angeordnet. Diese Federelemente sind beispielsweise aus Kunststoff bestehende Rohrfedern 14, 15, von denen drei gleichmäßig über den Umfang verteilt angeordnet sind. Die Längsachsen 16 der Rohrfedern verlaufen parallel zur optischen Achse 2. Die Rohrfedern stehen mit ihrem radial bezogen auf die optische Achse 2 äußeren Umfang nur geringfügig über den Ringumfang des Kondensorkörpers 1 hinaus.

Die Bewegungsnuten 12 für die Verstellung des Kondensorkörpers 1 in Richtung der optischen Achse 2 münden über eine Quernut 21 mit einem zur optischen Achse 2 achsparallel verlaufenden Mündungskanal 17 in die obere Deckfläche 30 des Kondensorkörpers 1 aus. In diesen Mündungskanal 17 werden die von dem Innenumfang 13 des Innenringes 3 radial nach innen stehenden Nutsteine zur Bewegungsnut 12 hin eingeführt. Nach Erreichung des unteren Endes 18 des Mündungskanals 17 wird der Kondensorkörper 1 in Pfeilrichtung 19 gedreht, bis die Kulissensteine an das Ende 20 der Quer- bzw. Horizontalnut 21 anstoßen, in die der Mündungskanal 17 übergeht und die die bajonettverschlußartige Halterung des Kondensorkörpers 1 bewirkt. Vom Ende 20 werden die Kulissensteine (nicht gezeigt) über einen zum Mündungskanal 17 parallelen Kanal der Bewegungsnut 12 zugeführt. Die Bewegungsnut 12 hat einen gewinde- bzw. schraubenlinienförmigen Verlauf gegenüber der optischen Achse 2. Durch die Führung der Nutsteine des Innenringes 3 in der schraubenlinienförmigen Bewegungsnut 12 wird die z-Verstellung des Kondensorkörpers 1 durch dessen Drehung bewerkstelligt, die dadurch beispielsweise nach Art der Drehfokussierung bei Zoom-Objektiven vorgenommen wird.

Innerhalb bzw. unterhalb des Kondensorkörpers 1 ist an diesem ein zwei Gehäuseschalen 23, 24 aufweisendes Blendengehäuse 25 einer Irisblende angeordnet. Darunter ist ein Filterhalter 26 für Blenden- oder Zonenschieber 27 angeordnet. Diese Schieber 27 sind im wesentlichen horizontal ausgerichtete Platten mit einer Einlegeöffnung 28 für Farb- oder Polarisationsfilter in Form von kreisförmigen, hinsichtlich ihres Durchmessers genormten Scheiben (nicht dargestellt). Bei Ausbildung des Schiebers 27 als Zonenblende ist die Ringöffnung 28 durch eine das Ringzentrum abdeckende Deckscheibe ausgefüllt. Dadurch kann der Lichtstrahl nur in Form eines Ringes durch die Einlegeöffnung 28 hindurchtreten. Je nach dem angestrebten Effekt wird ein ringförmiger Lichtdurchtritt unterschiedlichen Durchmessers und unterschiedlicher Ringstärke erzeugt. Entsprechend der Anzahl von gewünschten Varianten ist eine Anzahl von solchen radial in den Filterhalter 26, also letztlich in den Kondensorkörper 1 einschiebbarer Schieber 27 vorhanden. Das Griffende 29 des Schiebers 27 steht radial über den Umfang des Filterhalters 26 auch in Einschubstellung hinaus. Dadurch kann der Filterhalter 26 und gleichzeitig der fest an ihm fixierte Kondensorkörper 1 in Umfangsrichtung 11 innerhalb des Innenringes 3 gedreht werden, wodurch in einfacher Weise die besagte z-Verstellung des Kondensors bewerkstelligt wird.

Im Blendengehäuse 25 ist eine nicht näher dargestellte Irisblende angeordnet. Wenn der Blendenschieber 27 als Zonenblende bzw. Zonenschieber ausgebildet ist, ist er an seinem Umfang so ausgestaltet, daß mit seinem Einschieben in das Blendengehäuse 25 automatisch die Irisblende in ihre maximale Öffnungsstellung verbracht wird. Falls jedoch der Schieber 27 als Filterhalter wirksam ist, wo z.B. unterschiedliche Farbfilter in der Einlegeöffnung 28 ruhen, ist ein solcher Automatismus nicht vorgesehen. Dort soll nämlich die Irisblende hinsichtlich ihrer Durchtrittsöffnung verstellbar bleiben.

Die Ausgestaltung des Konditionierschiebers 27 und seine Einwirkungsmöglichkeit auf die Irisblende im Blendengehäuse 25 ist dabei weitgehend unabhängig von der konstruktiven Lösung der z-Verstellbarkeit des Kondensorkörpers 1 innerhalb des Innenringes 3.

### Bezugszeichenliste

- 1: Kondensorkörper
- 2: optische Achse
- 3: Innenring
- 4: Achsrichtung
- 5: Kondonsorhalter
- 6: Außenring
- 7: Stellschraube
- 8: Stellschraube
- 9: Schraubachse
- 10: Druckende
- 11: Umfangsrichtung
- 12: Bewegungsnut
- 13: Innenumfang
- 14: Rohrfeder
- 15: Rohrfeder
- 16: Federachse
- 17: Mündungskanal
- 18: unteres Ende
- 19: Pfeilrichtung
- 20: Ende
- 21: Querkanal
- 22: Parallelkanal
- 23: Gehäuseschale
- 24: Gehäuseschale
- 25: Blendengehäuse
- 26: Filterhalter
- 27: Blendenschieber
- 28: Einlegöffnung
- 29: Griffende
- 30: Deckfläche

## Patentansprüche

1. Kondensor, welcher in einer Verstelleinrichtung für eine Verschiebung in einer zu einer optischen Achse (2) normalen Ebene gelagert ist und in Richtung der optischen Achse (2) verstellbar ist,
dadurch gekennzeichnet,
daß der Kondensor in einem Kondensorkörper (1) aufgenommen ist, welcher in Richtung der optischen Achse (2) und in der zur optischen Achse (2) normalen Ebene in der Verstelleinrichtung verschieblich geführt gelagert ist.

2. Kondensor nach Anspruch 1, dadurch gekennzeichnet, daß die Verstelleinrichtung für die Verschiebung in der zur optischen Achse (2) normalen Ebene von einem in einem Kondensorhalter (5) verschieblich gelagerten und feststellbaren Ring (3) gebildet ist und daß der im wesentlichen zylindrische Kondensorkörper (1) über eine Kulissenführung (12) in dem Ring (3) relativ zu diesem verlagerbar geführt ist.

3. Kondensor nach Anspruch 1 oder 2,
dadurch gekennzeichnet,
daß die Verstelleinrichtung an ihrer zum Kondensorkörper (1) gewandten Innenfläche (13) wenigstens zwei nach innen ragende Vorsprünge bzw. Ausnehmungen aufweist, welche mit entsprechenden komplementär ausgebildeten Ausnehmungen (12) oder Vorsprüngen an der äußeren Umfangsfläche des Kondensorkörpers (1) zusammenwirken, wobei die Ausnehmungen (12) über wenigstens einen Teil ihrer Erstreckung geneigt relativ zur gegenüber der optischen Achse (2) normalen Ebene verlaufen.

4. Kondensor nach Anspruch 3,
dadurch gekennzeichnet,
daß die Ausnehmungen (12) in Form einer Gewindesteigung ausgebildet sind.

5. Kondensor nach Anspruch 3 oder 4,
dadurch gekennzeichnet,
daß sich der geneigte Bereich der Ausnehmungen (12) über einen Winkel von weniger als 90°, insbesondere etwa 70° des Umfanges des Kondensorkörpers (1) erstreckt.

6. Kondensor nach einem der Ansprüche 1 bis 5,
dadurch gekennzeichnet,
daß der Kondensorkörper (1) über einen Verschluß nach Art eines Bajonettverschlusses in der Verstelleinrichtung gesichert gehalten ist.

7. Kondensor nach Anspruch 6,
dadurch gekennzeichnet,
daß der bajonettartige Verschluß von wenigstens einem vom Ring (3) der Verstelleinrichtung radial nach innen ragenden Vorsprung gebildet ist, welcher mit einer Kulisse am Außenumfang des Kondensorkörpers (1) zusammenwirkt, wobei die Kulisse als sich in Richtung der optischen Achse erstreckende Längsnut (17) mit daran anschließender, am Umfang des Kondensorkörpers (1) verlaufender, abgestufter Quernut (21) ausgebildet ist.

8. Kondensor nach Anspruch 7,
dadurch gekennzeichnet,
daß die Kulissen (17, 21) des Bajonettverschlusses an die Ausnehmungen (12) für die Verstellung des Kondensorkörpers (1) in Richtung der optischen Achse über die abgestufte Quernut (21) anschließen bzw. mit diesen kombiniert sind.

9. Kondensor nach einem der Ansprüche 1 bis 8,
dadurch gekennzeichnet,
daß zwischen dem Innenumfang (13) der Verstelleinrichtung und dem zugewandten Außenumfang des Kondensorkörpers (1) biegsame bzw. elastische Elemente (14, 15) eingeschaltet sind.

10. Kondensor nach Anspruch 9,
dadurch gekennzeichnet,
daß die biegsamen bzw. elastischen Elemente (14, 15) von Federn gebildet sind, welche am Umfang des Kondensorkörpers (1) gleichmäßig verteilt in entsprechenden Aufnahmeöffnungen gesichert festgelegt sind und radial über den Außenumfang des Kondensorkörpers (1) vorstehen.

11. Kondensor nach einem der Ansprüche 1 bis 10,
dadurch gekennzeichnet,
daß am Kondensorkörper (1) wenigstens ein Blendengehäuse (25) und/oder ein Filterhalter (26) festgelegt sind, in welche in Schiebern (27) gelagerte Blenden und/oder Filter einlegbar bzw. einschiebbar sind, und daß Betätigungsgriffe (29) für die Handhabung der Schieber (27) gleichzeitig als Betätigungsgriffe für die Verstellung des Kondensorkörpers (1) in Richtung der optischen Achse (2) in der diesen umgebenden Verstelleinrichtung dienen.

12. Kondensor nach Anspruch 11,
dadurch gekennzeichnet,
daß der Schieber (27) als Blendenhalter ausgebildet ist, welcher an seinem Umfang mit Vorrichtungen versehen ist, die beim Einschieben in das Blendengehäuse automatisch eine vollständige Blendenöffnung der in dem Kondensor enthaltenen Irisblende bewirken.

13. Mikroskop umfassend einen Kondensor nach einem der Ansprüche 1 bis 12.
